# EUROPEAN PATENT APPLICATION

(11) **EP 1 501 149 A2**
(43) Date of publication of application: **26.01.2005**
(21) Application number: 04017367.6
(22) Date of filing: 22.07.2004
(51) Int. Cl.: H01M 8/06

(54) **Fuel cell system**

(30) Priority: 22.07.2003 JP 2003277657
(71) Applicant: NISSAN MOTOR CO., LTD., Yokohama-shi Kanagawa-ken (JP)
(72) Inventor: Tanaka, Shiro, Yokosuka-shi Kanagawa-ken (JP)
(74) Representative: Grünecker, Kinkeldey, Stockmair & Schwanhäusser Anwaltssozietät

(57) **Abstract**

A fuel cell generates electric power by the electrochemistry reaction of hydrogen and the oxygen in air. After the hydrogen discharged without being consumed from an anode at this time bums in a burner, it is discharged out of a fuel cell system.
However, while activity of the combustion catalyst in the burner is not carried out, a burner cannot burn hydrogen. Therefore, the burner includes a heat exchanger which raises the temperature of the combustion catalyst which bums the hydrogen contained in the hydrogen gas discharged from the fuel cell stack. The air which is compressed by the compressor and which increased temperature can be supplied to the heat exchanger. After the air supplied to the heat exchanger is supplied to an after-cooler, in order to cool to a temperature required for the reaction of the fuel cell stack, the air is supplied at the fuel cell. Therefore, since the combustion catalyst carries out activity certainly, the hydrogen discharged without being consumed by power generation can be fully burned.

## Description

### BACKGROUND OF THE INVENTION

The fuel cell system currently described by JP2002-216815A is equipped with a humidifier for humidifying a high polymer electrolyte film used for a solid high polymer type fuel cell. While the solid high polymer type fuel cell using the solid high polymer electrolyte has a low temperature of operation and handling is easy, the high polymer electrolyte film has the characteristic of not fully demonstrating hydrogen ion conductivity, if not fully humidified.

For this reason, each of a hydrogen supply system which supplies hydrogen to the fuel cell, and an oxygen supply system which supplies oxygen to the fuel cell provides the humidifier which uses a water penetration type hollow fiber, and moisture is moved to hydrogen supply gas from discharged hydrogen gas and to oxygen supply gas from discharged oxygen gas, and hydrogen supply gas and oxygen supply gas are humidified. Furthermore, a burner bums the discharged hydrogen gas and the discharged oxygen gas, and discharges the discharged hydrogen gas and oxygen gas as steam.

### SUMMARY OF THE INVENTION

However, while the discharged hydrogen gas from a fuel cell is discharged to the burner intermittently, the discharged oxygen gas is discharged continuously.

Therefore, when the temperature of the discharged oxygen gas in the period wherein hydrogen gas is not discharged is lower than the catalyst activity temperature of the burner, the burner is cooled by the discharged oxygen gas, the activity of a combustion catalyst may be unable to be demonstrated and the hydrogen contained in the discharged hydrogen gas may be unable to be fully burned.

If catalyst temperature is lower than catalyst activity temperature when starting the supply of hydrogen gas, the hydrogen contained in hydrogen gas may be unable to fully be burned.

Moreover, the oxygen gas discharged is cooled with the oxygen discharge system to a burner and the burner, in starting of a fuel cell at the freezing point, the condensation of moisture contained in the oxygen gas discharged may take place, and the fall of the ignition characteristic of a burner may occur.

In order to achieve the above object, the present invention provides a fuel cell system comprising a fuel cell which generates electrical power by causing hydrogen and oxygen to react; a compressor which compresses oxidizer gas supplied to a fuel cell stack; a catalyst burner with which a combustion catalyst burns mixed gas of discharged hydrogen gas which is intermittently discharged from the fuel cell stack and discharged oxygen gas continuously discharged from the fuel cell stack; and a heating device which generates heat in order to raise the catalyst temperature of a catalyst burner.

Even if cold the discharged oxygen is supplied, when the heating device raises burner catalyst temperature, it becomes possible to maintain the temperature of a combustion catalyst at comparatively high temperature, and to hold catalyst activity and the discharged hydrogen is intermittently supplied to the burner can be burned certainly.

The details as well as other features and advantages of this invention are set forth in the remainder of the specification and are shown in the accompanying drawings.

### BRIEF DESCRIPTION OF THE DRAWINGS

FIG. 1 is a schematic diagram of a fuel cell system according to a first embodiment of this invention.

FIG. 2 is a schematic diagram of a fuel cell system according to a second embodiment of this invention.

FIG. 3 is a schematic diagram of a fuel cell system according to a third embodiment of this invention.

### DESCRIPTION OF THE PREFERRED EMBODIMENTS

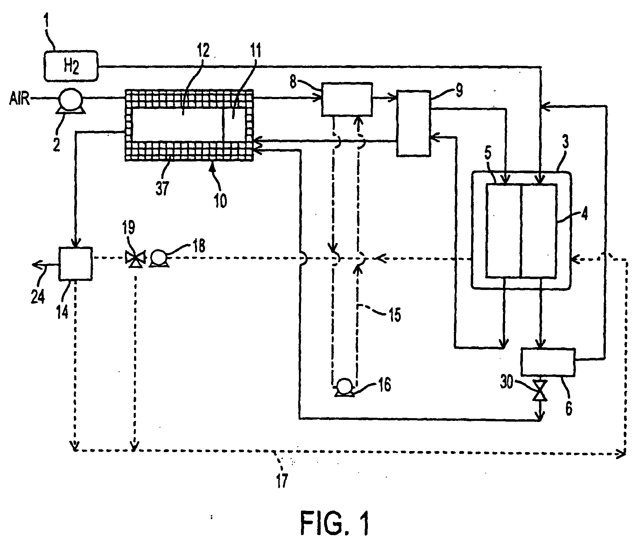

Fig. 1 shows the composition of the first embodiment of the operation of the fuel cell system of this invention. This fuel cell system provides a catalyst burner which burns the discharged-gas discharged from a fuel cell stack with a heating device to raise catalyst temperature, for example, and is a suitable fuel cell system for fuel cell vehicles.

As shown in FIG.1, a fuel cell system is comprised of a hydrogen supply device 1 with which a fuel cell system supplies hydrogen as fuel gas, a compressor 2 which supplies air as oxidizer gas, and a fuel cell stack 3 which has an anode 4 and cathode 5, circulation equipment 6 of the discharged hydrogen which is discharged from anode 4 and an after-cooler 8 which cools the air compressed by the compressor, a humidifier 9 which humidifies the moisture of discharged oxygen gas to the air cooled by the after-cooler 8, a burner 10 which bums mixed gas of the discharged hydrogen gas intermittently discharged from anode 4, and the discharged oxygen gas discharged from cathode 5, a heat exchanger 14 for defrosting, and cooling-water passage 15 for providing cooling water which cools an after-cooler 8, a cooling-water pump 16 which makes the cooling-water passage 15 circulate through cooling water, and a cooling-water passage 17 for providing cooling water which cools the fuel cell stack 3. The cooling-water passage 17 is equipped with cooling-water pump 18 provided to circulate through cooling water, a three-way valve 19 which switches a the cooling-water passage 17, the exhaust piping 24, and the purging valve 30 which discharges the discharged hydrogen gas from circulation equipment 6 to a burner 10.

The burner 10 is provided with a combustion catalyst 12 which burns the mixed gas mixed with a mixer 11 which mixes the discharged oxygen gas dehumidified via the humidifier 9, and the discharged hydrogen gas discharged from the purging valve 30, and a heat exchanger 37 in the burner for heating the combustion catalyst 12.

In addition, in this embodiment of the operation, the cooling system (PM-cooling system) which cools the after-cooler 8, and the cooling system (FC-cooling system) which cools the fuel cell stack 3 shall be separated, and heat shall be radiated out of a system in the heat of the cooling water of each system through a radiator which is not illustrated, respectively.

Moreover, in this fuel cell system the PM-cooling system also cools power modules, such as an inverter which charges direct-current electric power which the fuel cell stack generate to power for a vehicles drive ,which is not illustrated.

Next, an operation of the fuel cell system of the first embodiment is described below.

While supplying hydrogen to anode 4 from hydrogen supply equipment 1, the air which contains oxygen from a compressor 2 is supplied to cathode 5. Within the fuel cell stack 3, hydrogen and the oxygen in air carry out an electrochemistry reaction, and electric power is generated.

In that case, while the discharged hydrogen gas containing a part of hydrogen which is not consumed is discharged from anode 4, and the discharged oxygen gas containing a part of oxygen not consumed and the moisture generated by power generation is discharged from cathode 5.

The oxygen gas is pressurized to a pressure required for the reaction of the fuel cell stack 3 in compressor 2. The pressurized supply oxygen is cooled to a temperature required for the reaction of the fuel cell stack 3 by the after-cooler 8.

In the usual operation, the whole quantity of the discharged hydrogen gas circulates with circulation equipment 6. The discharged hydrogen gas which is circulated joins supply hydrogen and is again supplied to the anode 4.

The discharged hydrogen gas is purged once to the burner 10 by operation of the purging valve 30 at a rate from several seconds to dozens of seconds according to hydrogen concentration etc, and is exhausted outside by the exhaust piping24.

The discharged oxygen gas is exhausted outside from the exhaust piping 24 via a burner 10 via the humidifier 9 which humidifies the supply air to fuel cell stack 3.

A burner 10 provides a mixer 11 which mixes the discharged hydrogen gas which is intermittently supplied from the circulation equipment 6 and the discharged oxygen gas, and forms uniform mixed gas, the combustion catalyst 12 which includes an oxidization catalyst and burns the mixed gas, and a heat exchanger 37 in the burner prepared in the perimeter.

The combustion gas generated with the burner 10 is exhausted from the exhaust piping 24 via the heat exchanger 14 for defrosting.

The discharged oxygen gas is discharged from the cathode 5 of fuel cell stack 3 to a humidifier 9.

The discharged oxygen gas can lower its relative humidity by passing moisture to the supply air of comparatively low humidity discharged from the after-cooler 8 within a humidifier 9.

Then, the discharged oxygen gas is supplied to the burner 10 located in the lower reaches of a humidifier 9.

Under the present circumstances, in the heat exchanger 37 in the burner 10, heat exchange starts the surface of the combustion catalyst 12 due to the hot compressed air breathed out from the compressor 2, and temperature is raised.

Therefore, temperature is raised and relative humidity is simultaneously lowered also for the discharged oxygen gas.

For this reason, even when the temperature of the discharged oxygen gas is low, the temperature of the combustion catalyst 12 is maintained at comparatively high temperature, and it becomes possible to maintain the activity of the combustion catalyst 12.

Therefore, the hydrogen contained in the discharged hydrogen gas when purging and intermittently supplied to the burner 10 from circulation equipment 6 can burn promptly.

Moreover, the air breathed out from before compressor 2 is cooled by the heat exchanger 37 in the burner supplying the air to the after-cooler 8.

Because the load of the after-cooler 8 may decrease, the after-cooler 8 can be miniaturized and the energy consumed by the compressor 2 compressing supply air can be used effectively as thermal energy. Furthermore, since it is not necessary to use electric formula heating device, such as an electric heater, economical efficiency will improve.

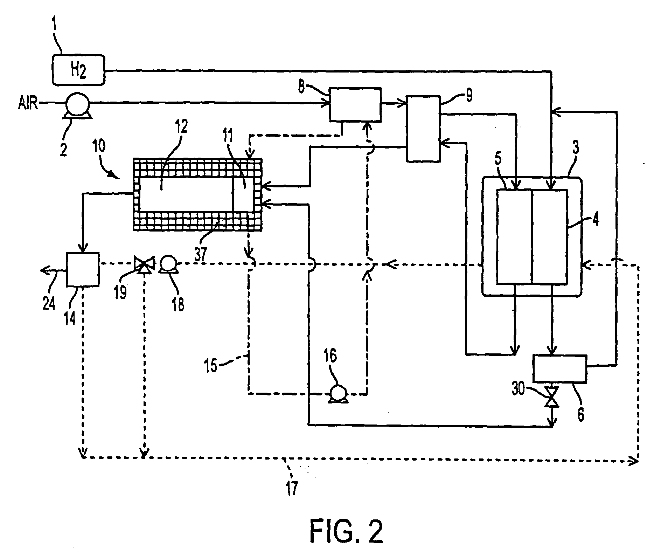

Fig. 2 shows the composition of the second embodiment of the operation of the fuel cell system of this invention. In this embodiment, the supply of cooling water (PM-cooling system) heated in the after-cooler 8 is used to cause a temperature rise in the heat exchanger 37 in the burner 10, which differs from the first embodiment wherein hot air compressed by the compressor 2 , is used to cause a temperature rise in to the heat exchanger 37 in the burner 10. Other composition and actions are the same as that of the first embodiment.

The discharged hydrogen gas from the cathode 5 of fuel cell stack 3 is supplied to the burner 10 through the humidifier 9 like the first embodiment. The discharged hydrogen gas is purged once to the burner 10 by operation of the purging valve 30 at a rate from several seconds to dozens of seconds according to hydrogen concentration etc.

The compressed hot air to which it is pressurized by the compressor 2 rise is cooled by the after-cooler 8 to a temperature required for the reaction of fuel cell stack 3. The cooling water of the PM-cooling system is circulated to the heat exchanger 37 in the burner 10, and heat is regularly given to the combustion catalyst 12, so that it is kept warm, and discharged oxygen gas is warmed.

Like the first embodiment, by being able to maintain the activity of the combustion catalyst 12, the thermal energy of the compressor 2 can be used effectively.

In the first embodiment, heat exchange is performed between the hot supply air pressurized by the compressor 2, and the discharged oxygen gas or the combustion catalyst 12. That is, by heat exchange between gas and gas or between gas and a solid, the discharged oxygen gas and the combustion catalyst 12 are warmed and kept warm.

On the other hand, in the second embodiment, heat exchange is performed between cooling water of the PM-cooling system and the discharged oxygen gas or the combustion catalyst 12. That is, by heat exchange between liquid and gas or between liquid and a solid, the discharged oxygen gas and the combustion catalyst 12 are warmed and kept warm.

For this reason, the efficiency of heat exchange can increase, and the heat exchanger 37 in the burner10 can be miniaturized and vehicle weight and arrangement can be improved.

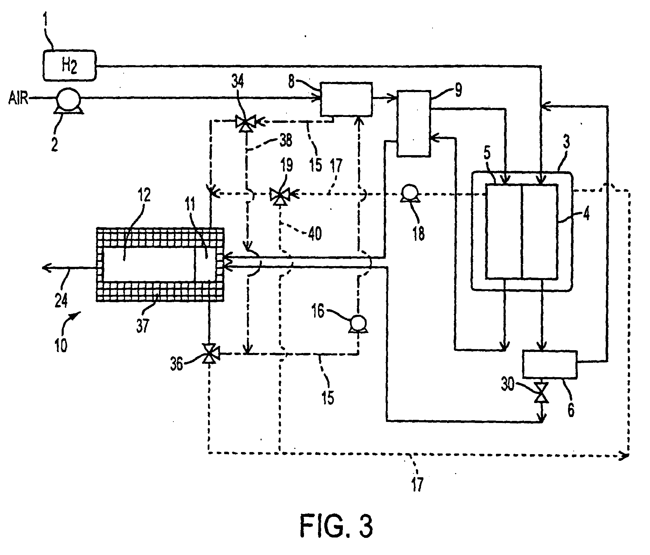

Fig. 3 shows the composition of the third embodiment of the operation of the fuel cell system of this invention. In this embodiment, hot water is supplied to the heat exchanger 37 from either the PM-cooling system (PM-cooling water) which passed the after-cooler 8, or the cooling water (FC-cooling water) of the FC-cooling system which passed fuel cell stack 3, which differs from the second embodiment which supplies the cooling water of the PM-cooling system which passed the after-cooler 8 to the heat exchanger 37 in the burner 10.

As shown in FIG. 3, a fuel cell system is comprised of hydrogen supply device 1 with which a fuel cell system supplies hydrogen as fuel gas, a compressor 2 which supplies air as oxidizer gas, and a fuel cell stack 3 which has an anode 4 and cathode 5, circulation equipment 6 of the discharged hydrogen which is discharged from anode 4, the after-cooler 8 which cools the air compressed by the compressor, a humidifier 9 which humidifies the moisture of discharged oxygen gas to the air cooled by the after-cooler 8, a burner 10 which bums the mixed gas of the discharged hydrogen gas intermittently discharged from anode 4, and the discharged oxygen gas discharged from cathode 5, and the cooling-water passage 15 for providing cooling water which cools an after-cooler 8, a cooling-water pump 16 which makes the cooling-water passage 15 circulate through cooling water, and the cooling-water passage 17 for providing cooling water which cools the fuel cell stack 3. The cooling-water passage 17 is equipped with a cooling-water pump 18 made to circulate through cooling water. a three-way valve 19 switches the cooling-water passage 17 to the burner heat exchanger 37 or to a bypass passage 40. A purging valve 30 discharges the discharged hydrogen gas from circulation equipment 6 to the burner 10 and then to exhaust piping 24. A three-way valve 34 which supplies PM-cooling water which comes out of the after-cooler 8 to the burner heat exchanger 37 or to a bypass passage 38. A three-way valve 36 circulates the PM-cooling water or the FC-cooling water from the burner heat exchanger 37 is returned to the cooling-water pump 16, or it returns to fuel cell stack 3.

The burner 10 is provided with the combustion catalyst 12 which burns the mixed gas mixed with the mixer 11 which mixes the discharged oxygen gas dehumidified via the humidifier 9 and the discharged hydrogen gas discharged from the purging valve 30, and the heat exchanger 37 need the combustion catalyst 12.

For the third embodiment, since the passage of oxygen gas and hydrogen gas, terms and conditions, etc. are similar to the first and second embodiments, explanation is omitted. Here, the refrigerant which circulates to the heat exchanger 37 in a burner 10 is explained.

The cooling water of the PM-cooling system is a refrigerant that circulates by the after-cooler 8, which cools the supply air (that is pressurized and heated) to a temperature required for the reaction of the fuel cell stack 3.

The FC-cooling water is a refrigerant used for cooling and temperature adjustment of the fuel cell stack 3. Moreover, the FC-cooling water is used also for defrosting when the fuel cell stack 3 freezes.

In the first and the second embodiment, when the fuel cell stack 3 freezes, hydrogen gas and air are burned with the fuel burner 10, heat exchange of the high temperature combustion exhaust gas and the FC-cooling water is carried out in the heat exchanger 14, and fuel cell stack 3 is defrosted by circulating the FC-cooling water to fuel cell stack 3.

This embodiment is constituted so that it can be made to switch between providing PM-cooling water and FC-cooling water to the heat exchanger 37 in a burner if needed as a refrigerant by forming the three-way valve 34 which adjusts the flow of PM-cooling water and the bypass passage 38 on the cooling-water passage 15 of PM-cooling water, the three-way valve 19 which adjusts the flow of FC-cooling water and the bypass passage 40 on the cooling-water passage 17 of FC-cooling water, and the three-way valve 36 in the exit of the heat exchanger 37 in the burner 10.

As a detailed operation, it is as follows. At the time of usual operation of a fuel cell system, PM-cooling water circulates the heat exchanger 37, and the discharged oxygen gas and the combustion catalyst 12 are warmed. Under the present circumstances, FC-cooling water flows from the three-way valve 19 to the bypass passage 40, and temperature is adjusted, cooling the fuel cell stack 3. FC-cooling water will not circulate to the heat exchanger 37 for defrosting, but will flow to the FC-cooling-water bypass passage.

When the fuel cell stack 3 freezes, FC-cooling water circulates to the heat exchanger 37, and the discharged oxygen gas and the combustion catalyst 12 are warmed. Under the present circumstances, PM-cooling water flows from the three-way valve 34 to the bypass passage 38.

The fuel cell stack 3 does not generate power when frozen, and is drying both the air and hydrogen that are supplied to the burner 10. Therefore, the temperature of the combustion catalyst 12 can rise and the combustion catalyst 12 activates comparatively easily at an electric heater etc. In this case, the atmosphere is at the freezing point. Since supply air is still low temperature comparatively even after pressurization by the compressor 2 the PM-cooling water is maintained at low temperature, and the PM-cooling water does not need to circulate to the heat exchanger 37 in the burner 10. Thus, the heat exchanger 37 in the burner 10 can perform as a heat exchanger for defrosting switching between providing PM-cooling water and FC-cooling water to the heat exchanger 37 in the burner 10 as needed. Therefore, according to this embodiment, the heat exchanger 14 for defrosting in the 1st and the 2nd embodiment is omissible from a fuel cell system.

## Claims

1. A fuel cell system comprising:
a fuel cell which generates electrical power by causing hydrogen and oxygen to react;
a compressor which compresses oxygen gas supplied to a fuel cell stack;
a catalyst burner with a combustion catalyst which bums mixed gas of discharged hydrogen gas which is intermittently discharged from the fuel cell stack and discharged oxygen gas continuously discharged from the fuel cell stack; and
a heating device which raises the catalyst temperature of the catalyst burner.

2. The system according to claim 1, wherein the heating device includes a heat exchanger in the catalyst burner.

3. The system according to claim 2, wherein the heating device circulates oxygen gas from the compressor in the heat exchanger.

4. The system according to claim 2, wherein the heating device circulates cooling water of an after-cooler for lowering the temperature of the oxygen gas from the compressor in the heat exchanger.

5. The system according to claim 2, wherein the heating device circulates either cooling water of an after-cooler for lowering the temperature of the oxygen gas from the compressor or cooling water of the fuel cell stack in the heat exchanger according to operation conditions.
